Europäisches Patentamt

European Patent Office

Office européen des brevets

(11) Publication number: **0 265 197**
**A2**

(12) **EUROPEAN PATENT APPLICATION**

(21) Application number: **87309194.6**

(22) Date of filing: **19.10.87**

(51) Int. Cl.⁴: **B 64 C 25/26**

(30) Priority: **24.10.86 GB 8625505**

(43) Date of publication of application:
**27.04.88 Bulletin 88/17**

(84) Designated Contracting States: **DE ES FR GB IT**

(71) Applicant: **Dowty Rotol Ltd.**
**Cheltenham Road**
**Staverton Gloucester (GB)**

(72) Inventor: **Bennett, Ian Robert**
**25, Benhall Avenue**
**Cheltenham Gloucestershire GL51 6AF (GB)**

(74) Representative: **Bousfield, Roger James**
**Patents Department Dowty Group Services Limited Arle Court**
**Cheltenham, Glos. GL51 0TP (GB)**

(54) Locking mechanisms.

(57) A locking mechanism for locking an assembly, such as aircraft landing gear, in either of two positions.

The mechanism comprises a lockable guide member with a recess therein. The guide member is pivotable between a first orientation in which a part of the assembly is locked in the recess with the assembly in a first position, and a second orientation in which a part of the assembly is locked in the recess with the assembly in a second position.

The mechanism further comprises an engaging member which may be mounted on the guide member and which is moveable relative to the recess, between a locked position and an unlocked position. In the unlocked position, an actuating means for moving the engaging member, has a part which is received within the recess to lock the locking mechanism in position and prevent disengagement from the recess.

Fig.1.

**Description**

LOCKING MECHANISMS

This invention relates to locking mechanisms and is more particularly, but not exclusively, concerned with locking mechanisms for aircraft landing gear.

Aircraft landing gear commonly incorporates mechanisms for locking the landing gear in a retracted position (uplock position) so that the landing gear is not accidentally lowered during flight, and separate mechanisms for locking the landing gear in a fully lowered position (downlock position) to prevent collapse of the landing gear when engaged with the ground. A known locking mechansim for locking the landing gear in the uplock position comprises a hydraulically operated latch mounted on the aircraft frame for engaging an uplock pin appropriately positioned on the landing gear, and a known locking mechanism for locking the landing gear in the downlock position comprises a toggle for locking the landing gear in the extended position.

The invention is concerned with providing a locking mechanism which is capable of performing both the uplock function and the downlock function in aircraft landing gear.

According to the present invention there is provided a locking mechanism for locking an assembly in two different positions, the mechanism comprising a rockable guide member having a recess therein for receiving a part of the assembly to be locked, the guide member being pivotable between a first angular orientation in which a part of the assembly is received within the recess to lcok the assembly in a first position and a second angular orientation in which a part of the assembly is received within the recess to lock the assembly in a second position, an engaging member mounted on the guide member and movable relative to the recess between a locked position in which part received within the recess is prevented by the engaging member from moving out of the recess and an unlocked position in which a part received within the recess is not prevented by the engaging member from moving out of the recess, and actuating means for controlling movement of the engaging member relative to the recess.

Where such a locking mechanism is used for locking aircraft landing gear, the mechanism may be adapted to receive an uplock pin on the landing gear within the recess to lock the landing gear in the uplock position and to receive a downlock pin on the landing gear within the recess to lock the landing gear in the downlock position. Separate uplock and downlock pins will generally be necessary, although it may be feasible to use a common locking pin for both functions in certain circumstances.

In a preferred form of the invention the guide member is formed with at least one camming surface which is adapted to be engaged by a part of the assembly to pivot the guide member between the first and second angular orientations during change of the assembly between its first and second positions. The assembly part which engages the camming surface may be the part which is to be received within the recess or another part. Conveniently the guide member is formed with two camming surfaces a first of which is adapted to be engaged by an assembly part to pivot the guide member into its first angular orientation and a second of which is adapted to be engaged by an assembly part to pivot the guide member into its second angular position. Where separate uplock and downlock pins are provided for locking aircraft landing gear, the first camming surface may be arranged to be engaged by one of the pins and the second camming surface may be arranged to be engaged by the other pin.

The engaging member is advantageously pivotally mounted on the guide member so as to be pivotable between its locking position and its unlocked position. With such a construction it may be arranged that the part to be locked within the recess is capable of automatically moving the engaging member into its unlocked position when the part moves out of the recess and of automatically moving the engaging member into its locked position when the part moves into the recess.

It is also preferred that the mechanism should include means for latching the engaging member in its locked position. The latch means may comprise a latching arm pivotally mounted on the guide member and having an end portion which is arranged to be engaged with a portion of the engaging member in a first pivotal position of the latching arm and to be disengaged from said portion of the engaging member in a second pivotal position of the latching arm. With such a construction it may be arranged that disengagement of the latch means enables the part within the recess to automatically move the engaging member into its unlocked position to allow the part to move out of the recess.

Furthermore, the mechanism may include a rocker engageable by a part of the engaging member and co-operable with the latch means to pivot the latching arm into its first pivotal position in which it is engageable with said portion of the engaging member when the rocker is engaged by said part of the engaging member. With such a construction it may be arranged that movement of a part to be locked into the recess automatically causes movement of the engaging member into its locked position by engagement of the engaging member by the part to be locked, and such movement of the engaging member results in engagement of the rocker by said part of the engaging member to cause latching of the engaging member by the latch means.

The actuating means may be a hydraulic, mechanical or electromagnetic jack and conveniently comprises a body part mounted on the guide member and an actuator displaceable within the body part between first and second positions. The actuating means may be arranged to co-operate with the latch means so that displacement of the actuator to its first position causes disengagement of the latching arm from said portion of the engaging member.

In order that the invention may be more fully understood, a preferred embodiment of locking mechanism in accordance with the invention will now be described, by way of example, with reference to the accompanying drawings, in which:

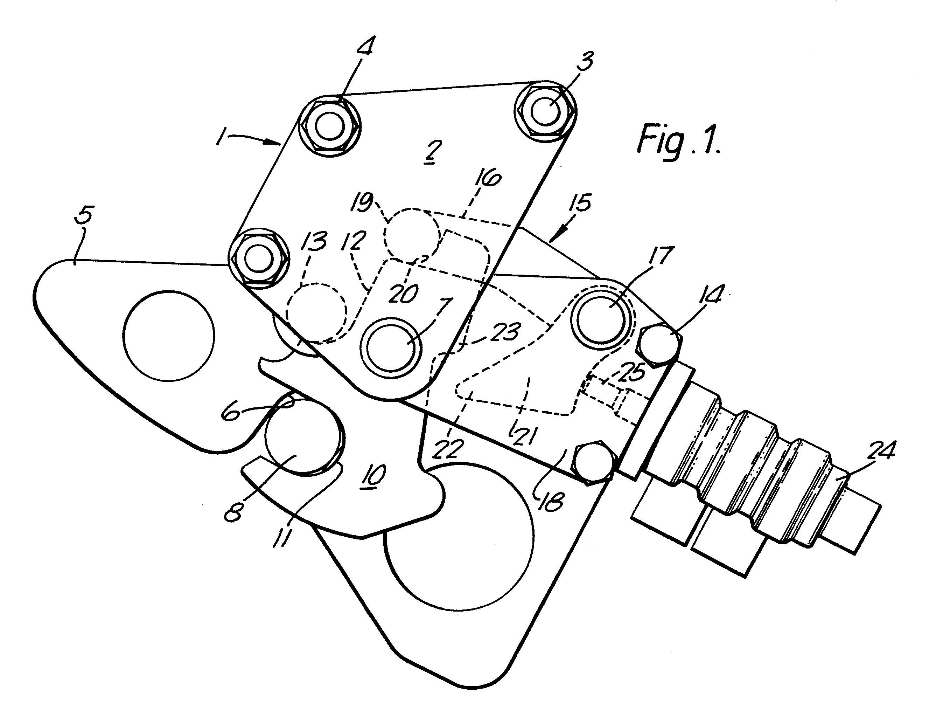

Figures 1 to 6 show the mechanism diagrammatically from one side in six different positions of the mechanism.

Referring to the figures, the illustrated locking mechanism, which is provided on an aircraft frame for locking aircraft landing gear, incorporates a mounting unit 1 having two side plates, of which only the side plate 2 is visible in the figures, and nuts 3 and bolts 4 interconnecting the side plates. The mounting unit 1 is fixed to the aircraft frame. A guide plate 5 having a recess 6 is positioned between the side plates of the mounting unit 1 and is mounted on a pivot pin 7 so as to be rockable with respect to the mounting unit 1. The recess 6 is provided to receive either a downlock pin 8 or an uplock pin 9 of the aircraft landing gear.

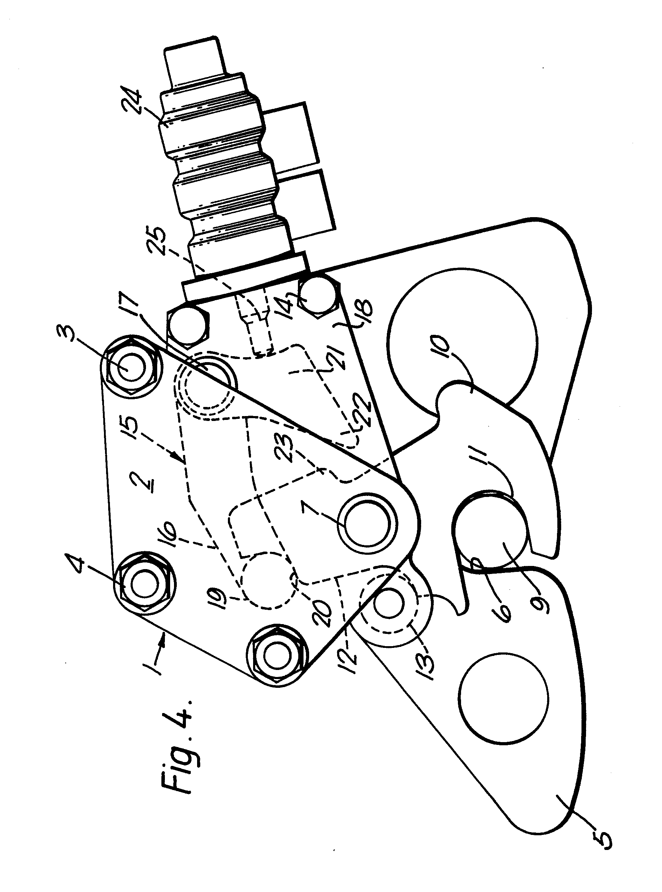

An engaging plate 10 is also mounted on the pivot pin 7 so as to be capable of limited pivotal movement with respect to the mounting unit 1 and also with respect to the guide plate 5. The engaging plate 10 has a hook portion forming a detent 11 shaped to engage the pin 8 or 9 to lock the pin 8 or 9 within the recess 6 when the engaging plate 10 is in a locked position as shown in Figures 1 and 4. The movement of the engaging plate 10, which has a recessed portion 12, is limited by means of a stop pin 13 on the guide plate 5.

In addition the mechanism includes a latch 15 comprising a latching arm 16 pivotally mounted on the guide plate 5 by means of a pivot pin 17 extending through the guid plate 6 and a cover plate 18 fixed to the guide plate by bolts 14. The latching arm 15 has a latch pin 19 at one end adapted to be received within a cut-out 20 in the edge of the engaging plate 10 to hold the engaging plate 10 in its locked position as shown in Figures 1 and 4. The pin 19 is urged into cut-out 20 by a spring (not shown) mounted between plate 10 and arm 16.

A rocker 21 is also mounted on the pivot pin 17 so as to be pivotable with the latching arm 16. The rocker 21 has a foot portion 22 which can engage a shoulder 23 of the engaging plate 10 so as to pivot the latching arm 16 into its latching position. A hydraulic jack 24 is fixed to one edge of the guide plate 5 and has an actuator 25 which is displaceable under hydraulic control so as to pivot the rocker 21 and latching arm 16 about the pivot pin 17.

The manner in which the mechanism serves to lock the aircraft landing gear in the downlock and uplock positions will now be described in more detail with reference to the different positions of the mechanism as shown in Figures 1 to 6 of the drawings.

Figure 1 shows the mechanism in the downlock positon with the downlock pin 8 locked within the recess 6 in the guide plate 5 so as to lock the landing gear in its fully lowered position. The downlock pin 8 may project from one side of the upper link of a folding sidestay (not shown) of the landing gear.

Indicator switches (not shown) actuated by the latching arm 16 may serve to provide an electrical indication that the mechanism is in the locked position. In this position both of plates 5 and 10 are capable of limited rocking movements with respect to the unit 1 so that the locking mechanism is relatively immune to the effects of air frame deflection.

When the landing gear is to be retracted, the downlock pin 8 is released from the recess 6 by actuating the hydraulic jack 24 so that the latching arm 18 and the rocker 21 are pivoted in a clockwise direction.

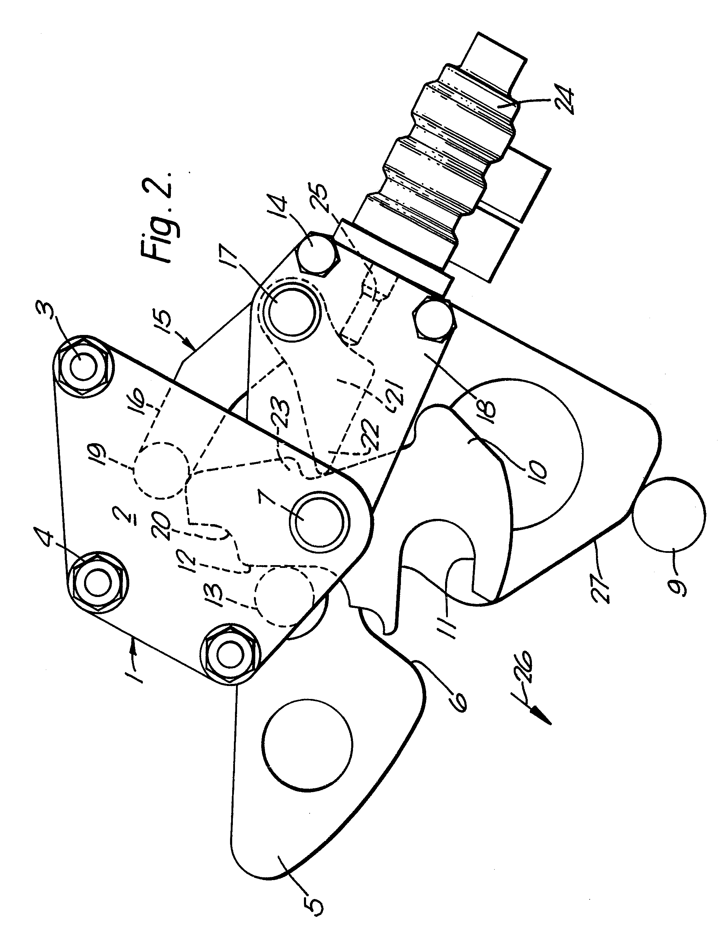

The downlock pin 8 now acts against the engaging plate 10 causing counter-clockwise pivoting of the engaging plate 10 under the effect of the downward force exerted by the downlock pin 8. The downlock pin 8 is thereby freed from the detent 11 and leaves the recess 6 in the direction of the arrow 26 as shown in Figure 2. During subsequent movement of the retracting landing gear, the uplock pin 9 engages a camming edge 27 of the guide plate 5 as also shown in Figure 2. The uplock pin 9 may form an extension of a pivot pin coupling the folding sidestay to the leg (not shown) of the landing gear.

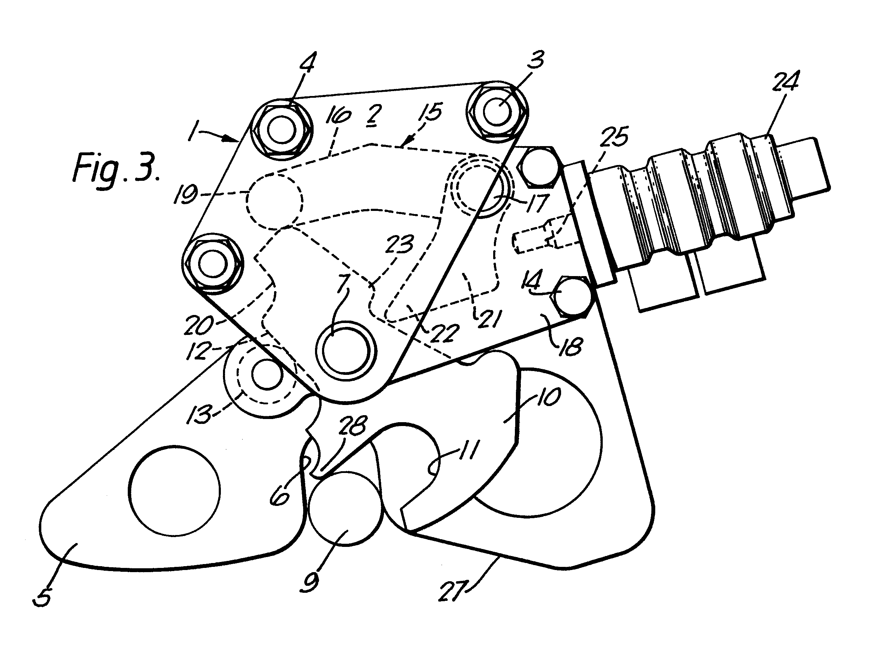

During subsequent retraction of the landing gear, the uplock pin 9 travels along the camming edge 27 and, in so doing, pivots the guide plate 5 counter-clockwise, together with the hydraulic jack 24, the engaging plate 10 and associated assembly, with respect to the mounting unit 1. Such pivoting continues until the uplock pin 9 enters the recess 6 as shown in Figure 3. The pin 9 thereby engages a portion 28 of the engaging plate 10 and pivots the engaging plate 10 clockwise with respect to the guide plate 5. In sequence with this step a sequencing valve (not shown) is operated to reverse the hydraulic supply to the hydraulic jack 24 and cause retraction of the actuator 25.

In conjunction with clockwise pivoting of the engaging plate 10, the latch pin 19 rides along the engaging plate 10 pivoting the latch 15. This resutls in corresponding pivoting of the latching arm 16 to engage the latch pin 19 within the cut-out 20 so as to lock the uplock pin 9 within the recess 6, as shown in Figure 4, for locking of the landing gear in its fully retracted position. It will be appreciated that the locked position of the mechanism as shown in Figure 4 corresponds to the locked positon as shown in Figure 1 except that the complete guide plate 5 and associated assembly is at a different orientation in the two figures corresponding to the required orientations for locking of the lowered landing gear by means of the downlock pin 8 and for locking of the retracted landing gear by means of the uplock pin 9.

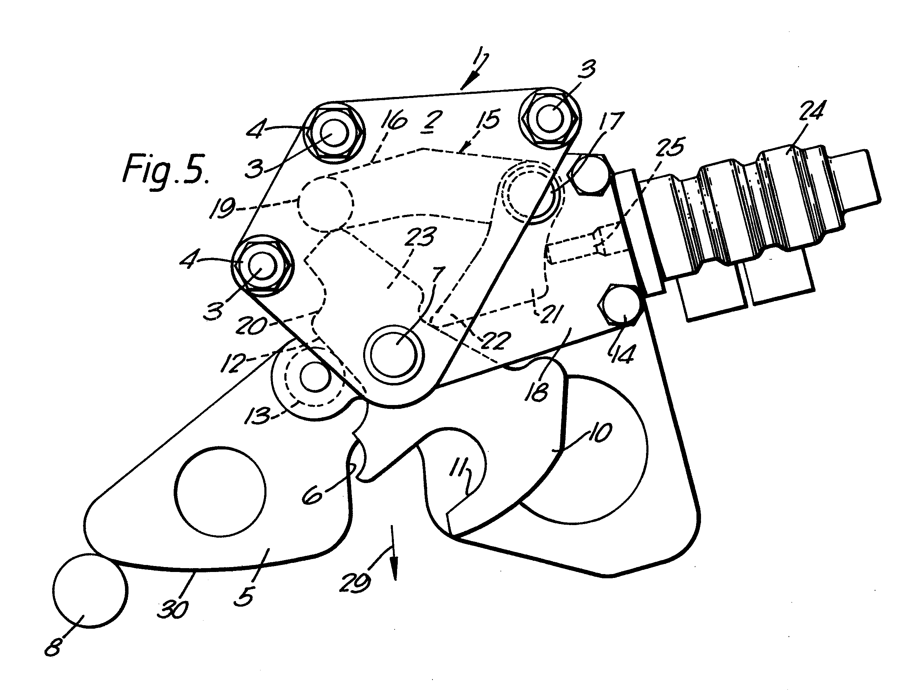

The manner in which the uplock pin 9 is released from the recess 6 for lowering of the landing gear by actuation of the hydraulic jack 25 is directly analogous to the manner in which the downlock pin 8 is released for retraction of the landing gear as already described above. The direction in which the uplock pin 9 leaves the recess 6 is indicated by the arrow 29 in Figure 5. During further lowering of the landing gear, the downlock pin 8 engages a camming edge 30 of the guide plate 5 as also shown in Figure 5.

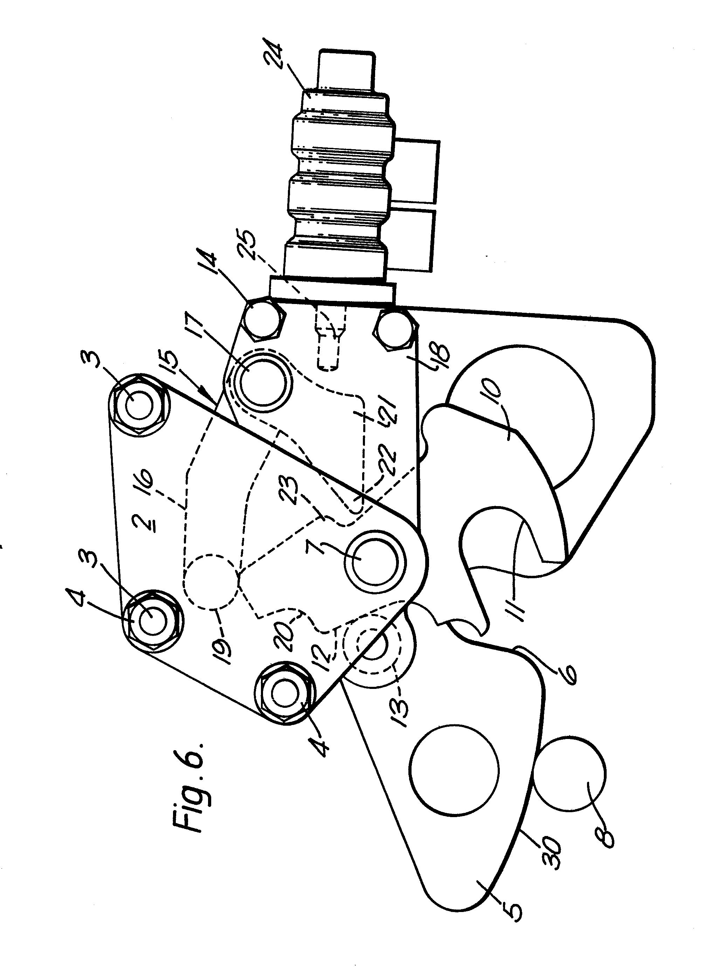

During subsequent lowering of the landing gear, the downlock pin 8 travels along the camming edge 30 and, in so doing, pivots the guide plate 5 clockwise with respect to the mounting unit 1, as shown in Figure 6 (which shows the guide plate 5 in a position intermeditae to its two extreme orientations). Eventually the guide plate 5 is pivoted to a position as shown in Figure 1, and the downlock pin 8 is locked within the recess 6 in a manner directly analogous to that described above with reference to locking of the uplock pin 9 within the recess 6.

In the above described mechanisms a single hydraulic jack is provided which is mounted on the guide plate enabling the jack to actuate the latch in both the downlock position and the uplock position of the mechanism. In a modification of this arrangement two hydraulic jacks are mounted on the mounting unit and are each arranged to actuate the latch in a respective on of the downlock and uplock positions. In a further modification a single hydraulic jack is mounted on the mounting unit and a push-pull connection is established between the jack actuator and one end of a lever, one end of the lever being arranged to actuate the latch in the downlock position and the other end of the lever being arranged to actuate the latch in the uplock position. In this modification no separate frequencing valve is required for control of the hydraulic jack.

## Claims

1. A locking mechanism for locking an assembly in two different positions, the mechanism comprising a rockable guide member having a recess therein for receiving a part of the assembly to be lcoked, the guide member being pivotable between a first angular orientation in which a part of the assembly is received within the recess to lock the assembly in a first position and a second angular orientation in which a part of the assembly is received with the recess to lock the assembly in a second position, an engaging member mounted on the guide member and movable relative to the recess between a locked position in which a part received within the recess is prevented by the engaging member from moving out of the recess and an unlocked position in which a part received within the recess is not prevented by the engaging member from moving out of the recess, and actuating means for controlling movement of the engaging member relative to the recess.

2. A locking mechanism as claimed in claim 1 wherein the guide member is formed with at least one camming surface which is adapted to be engaged by a part of the assembly to pivot the guide member between the first and second angular orientations during change of the assembly between its first and second positions.

3. A locking mechanism as claimed in claim 1 or 2 wherein the guide member is formed with two camming surfaces a first of which is adapted to be engaged by an assembly part to pivot the guide member into its first angular orientation and a second of which is adapted to be engaged by an assembly part to pivot the guide member into its second angular position.

4. A locking mechanism as claimed in any one of claims 1, 2, or 3 wherein the engaging member is pivotally mounted on the guide member so as to be pivotable between its locked position and its unlocked position.

5. A locking mechanism as claimed in any one of the preceding claims wherein the mechanism also includes means for latching the engaging member in its locked position.

6. A locking mechanism as claimed in any one of the preceding claims wherein the latch means comprises a latching arm pivotally mounted on the guide member and having an end portion which is arranged to be engaged with a portion of the engaging member in a first pivotal position of the latching arm and to be disengaged from said portion of the engaging member in a second pivotal position of the latching arm. With such a construction it is arranged that disengagement of the latch means enables the part within the recess to automatically move the engaging member into its unlocked position to allow the part to move out of the recess.

7. A locking mechanism as claimed in any one of the preceding claims wherein the mechanism also includes a rocker engageable by a part of the engaging member and co-operable with the latch means to pivot the latching arm into its first pivotal position in which it is engageable with said portion of the engaging member when the rocker is engaged by said part of the engaging member.

0265197

Fig. 1.

0265197

Fig. 2.

0265197

Fig. 3.

0265197

Fig. 4.

Fig.5.

Fig.6.